(19) Europäisches Patentamt / European Patent Office / Office européen des brevets

(11) **EP 4 243 969 B1**

(12) **EUROPEAN PATENT SPECIFICATION**

(45) Date of publication and mention
of the grant of the patent:
**22.01.2025 Bulletin 2025/04**

(21) Application number: **21835757.2**

(22) Date of filing: **14.12.2021**

(51) International Patent Classification (IPC):
**B01D 67/00** (2006.01)   **B01D 53/22** (2006.01)
**B01D 69/14** (2006.01)   **B01D 71/02** (2006.01)
**C08F 6/20** (2006.01)   **B01J 8/24** (2006.01)
**B01J 19/24** (2006.01)   **C08F 6/00** (2006.01)

(52) Cooperative Patent Classification (CPC):
(C-Sets available)
**B01D 69/148; B01D 53/228; B01D 67/00793;**
**B01D 71/028; B01D 71/0281; B01J 8/24;**
**B01J 19/2465; B01J 19/2475; C08F 6/001;**
B01D 2053/221; B01D 2256/24        (Cont.)

(86) International application number:
**PCT/EP2021/085715**

(87) International publication number:
**WO 2022/129063 (23.06.2022 Gazette 2022/25)**

(54) **PROCESS FOR THE MAKING OF POLYPROPYLENE, MEMBRANE USED IN THE PROCESS AND PROCESS OF MANUFACTURE OF THE MEMBRANE**

VERFAHREN ZUR HERSTELLUNG VON POLYPROPYLEN, IN DIESEM VERFAHREN VERWENDETE MEMBRAN UND VERFAHREN ZUR HERSTELLUNG DER MEMBRAN

PROCÉDÉ DE FABRICATION DU POLYPROPYLÈNE, MEMBRANE UTILISÉE DANS LE PROCÉDÉ ET PROCÉDÉ DE FABRICATION DE LA MEMBRANE.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2020 EP 20214174**

(43) Date of publication of application:
**20.09.2023 Bulletin 2023/38**

(73) Proprietor: **UniSieve Ltd**
**8045 Zürich (CH)**

(72) Inventors:
• **SCHNEIDER, Elia**
 **8050 Zürich (CH)**
• **HESS, Samuel**
 **8050 Zürich (CH)**

(74) Representative: **E. Blum & Co. AG**
**Franklinturm**
**Hofwiesenstrasse 349**
**8050 Zürich (CH)**

(56) References cited:
**WO-A1-2005/082957    WO-A1-2019/118073**
**WO-A1-2019/186134    US-A- 4 623 704**
**US-A1- 2016 263 533    US-A1- 2020 306 698**
**US-B1- 6 271 319    US-B2- 9 120 882**

Remarks:
The file contains technical information submitted after the application was filed and not included in this specification

(52) Cooperative Patent Classification (CPC): (Cont.)

C-Sets
**C08F 6/001, C08L 23/12**

**Description**

The present invention relates to a continuous process for making polypropylene, a membrane suited to be used in that process and a method for manufacturing the membrane.

Today, polyolefines are commercially manufactured using continuous processes starting from high-purity olefins, typically called polymer-grade olefins. One reason for using polymer-grade olefins is to minimize purge-streams and losses during manufacturing as well as accumulation of non-reactive compounds in the reactor. Further, purge gas of polymer reactors containing valuable product compounds, e.g. propylene, are often burned as conventional separation technology is not profitable. The purge is necessary to remove non-reactive compounds of the feed from the reactor, e.g. propane. Attempts have been made to use intermediate-grade olefins as a starting material and to optimize purge-and recycle- streams in the polymerisation processes.

Van Egmond et al (WO2005/082957) describes a process of making polypropylene from intermediate grade propylene. The process described requires downstream of a reactor (108) a polymer separation system (109) and a distillation unit (111) for obtaining a recycle stream comprising 30-60% propylene to be recycled.

It is apparent that both, distillation step and polymer separation system are disadvantageous, as energy-consuming.

Further, Baker et al (US6271319) describe membrane-augmented polypropylene manufacturing. The process described requires downstream of a reactor (103) a separation unit (105) to obtain a vent stream (107) and a fraction thereof, typically no more than 10%, are subjected to a membrane separation. The membranes disclosed in Baker et al only allow moderate olefin-increase compared to the feed, typically no more than about 15% or even only 5%. The membrane separation step results in a residue stream typically containing as much as 30% propane or more, which is vented from the polymerization process, and a permeate stream containing 95% or less propylene, which is recirculated to the polymerization reactor.

It is apparent that both, polymer separation (105) and insufficient membrane separation (110) are disadvantageous, as they result in large purge- streams and losses (108, 111).

Further, Stark et al describe gas separation processes using MOF containing membranes. The membranes comprise a composite material which is composed of a polymer matrix exhibiting channel-like structures (4) and MOFS embedded in these structures. The membranes are suited for gas separation and show selectivities above the Knudsen limit.

US 2020/306698 A1, WO 2019/186134 A1, US 2016/263533 A1, US 9 120 882 B2 and US 2015/251139 A1 disclose membranes and methods of production of polypropylene.

In consequence, there is a need for improved manufacturing of polyolefines addressing these shortcomings.

Thus, it is an object of the present invention to mitigate at least some of these drawbacks of the state of the art. In particular, it is an aim of the present invention to provide an improved method for manufacturing polypropylene.

It is a further aim to provide improved membranes, particularly membranes for adapted to these manufacturing processes.

These objectives are achieved by the method as defined in claim 4.

Further aspects of the invention are disclosed in the specification and independent claims, preferred embodiments are disclosed in the specification and the dependent claims. Accordingly, the invention relates

- in a first aspect to a method for manufacturing polypropylene using a membrane separation downstream the reactor;
- in a second aspect to the use of membranes in such processes;
- in a third aspect to membrane units and polymerisation plants comprising such membrane units as well as the manufacturing threof.

The present invention will be described in more detail below.

Membrane: The term membrane is known in the field and denotes a device that functions as a selective barrier due to the presence of pores / channels. Membranes may be present in the form of flat sheets or in the form of hollow fibers. In each case, such membrane is defined by two surfaces and channels / pores perpendicular to the membrane surfaces.

Flat sheets are typically manufactured continuously and typically have a width of 0. 25 - 1.5 m and a thickness of 10 - 200 micrometers. Hollow fibres are typically manufactured continuously and have an outer diameter of 0.1 - 5 mm and typically have a wall thickness of 10 - 500 micrometers.

In the context of this invention, the polymer pore size / channel size of the membrane may cover a broad range, typically from 20 to 3000 nm, preferably from 100 to 500 nm. As will become apparent, "polymer pore size" and "molecular sieve pore size" are to be distinguished. Contrary to polymer pore size, the molecular sieve pore size is on another scale, in the subnanometre range.

A membrane is "self-supporting", if the membrane itself is freestanding and / or can be handled manually without a supporting structure. Further, a membrane may be part of a layered structure, i.e. comprise additional layers, such as supporting layers or covering layers. Such additional layers may improve stability of the membrane, allowing reliable manufacturing and / or use at higher pressures.

MOFs (as outlined in further detail below) are embedded in these pores / channels, particularly channels vertical to the membrane plane. Without being bound to theory, it is believed that the MOFs substantially improve the membrane's selectivity. The selectivity of a membrane for the components of a given fluid may be assessed by considering Knudsen-diffusion. Assuming a simple pore / channel, diffusion is dependent on pore radius and molecular mass. The separation of compounds stemming from Knudsen diffusion can be calculated with the following formula, where alpha is the selectivity of compound A over compound B and Ma and Mb is the respective molar mass.

$$\alpha_{MA/MB} = \sqrt{\frac{M_B}{M_A}}$$

For example, the pair propylene / propane has a value of 1.023 and the pair ethylene / ethane has a value of 1.035. The inventive membranes show values way above the Knudsen limit, particularly a selectivity for the pair propylene / propane of at least 10 and the pair ethylene / ethane of at least 5. This finding indicates that the MOFs incorporated in the membrane significantly influence the selectivity of the membranes. On the other hand, membranes showing a selectivity in the range of the Knudsen limit apparently possess simple pores / channels that only provide moderate selectivity, i.e. a selectivity not influenced by molecular sieving. To distinguish from simple membranes, having a selectivity in the range of the Knudsen limit, the expression "tightly embedded MOFs" is chosen.

Metal-organic frameworks (MOFs): The term MOF is known in the field and denotes chemical entity comprising metal ions (including clusters) cores and ligands (also termed "struts"). The ligands have at least two coordination sites. In the context of this invention MOFs do form a 3 dimensional network with open pores. As a characteristic of MOFs, they possess a porous structure, defined by its molecular sieve pore size. Percentages given in this specification, unless otherwise indicated, relate to mass - %.

The present invention will be better understood by reference to the **figures.**

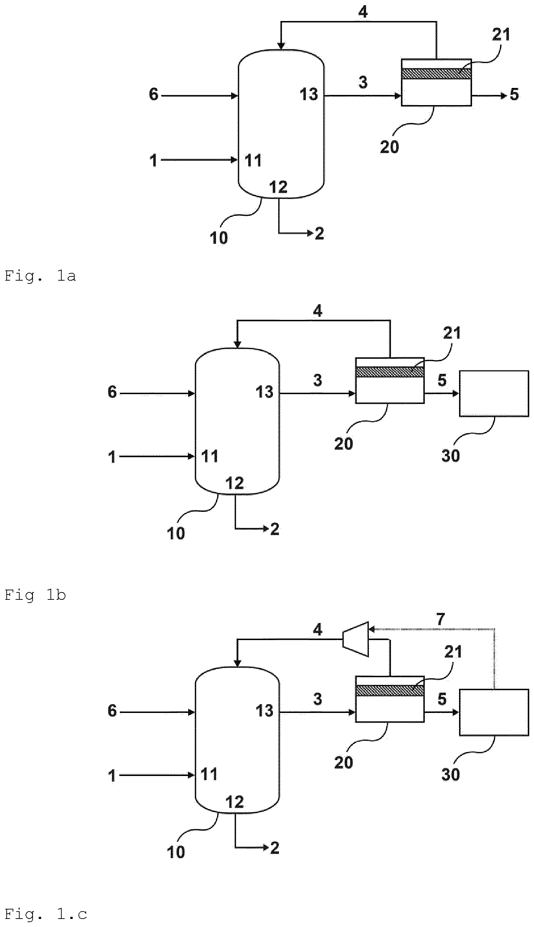

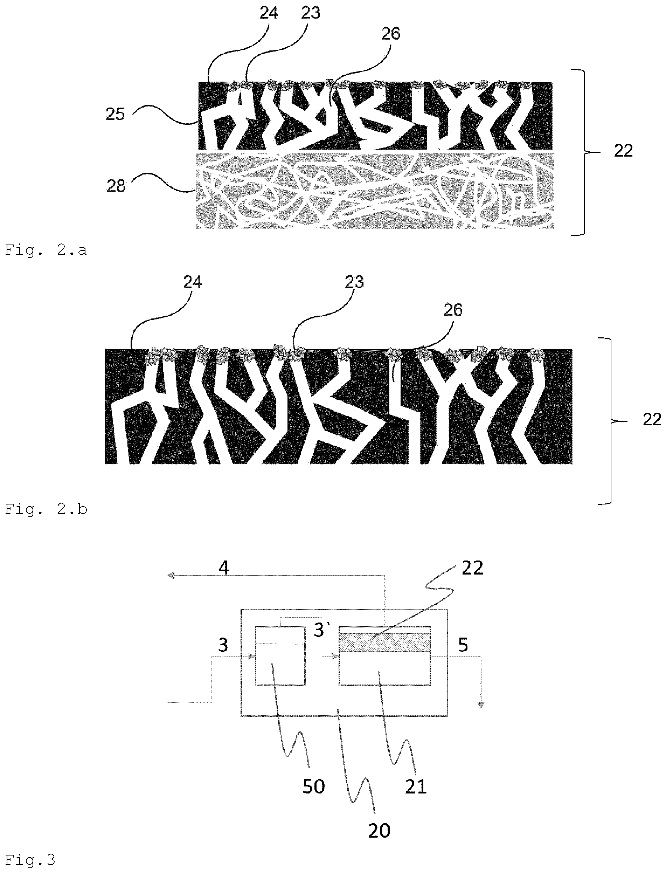

Figures 1 and 3 outline the polyolefine manufacturing process described herein. List of references:

(10) polymerisation reactor with inlet (11), polyolefine outlet (12) and first effluent outlet (13)
(20) membrane separation unit with membrane module(s) (21) comprising membrane(s) (22) (the individual membrane not shown)
(30) gas turbine or heating unit
(50) washing module
(1) olefin stream
(2) polyolefine product
(3) first effluent stream; (3') purified effluent stream
(4) olefin-enriched recycle stream, permeate
(5) second effluent stream, depleted in olefin, residue
(6) polyolefine forming catalyst
(7) energy generated by a gas turbine (30)

Figure 2 outlies the structure of suitable membranes (22), Fig. 2a shows an embodiment with backing layer while Fig. 2b shows an embodiment without backing layer. An optional 2nd functional layer (27) opposite to the backing layer(28) may be present (not shown). List of references:

(25) 1st functional layer comprising a polymer matrix (24) with channels (26) perpendicular to the membrane surface and molecular sieves (23) tightly embedded in said channels (26) ;
(28) backing layer connected to said 1st functional layer (25), a crucial feature to ensure pressure and tear resistance.

In more general terms, in **a first aspect,** the invention relates to a continuous process for making polypropylene (2), comprising the steps of (a) feeding an olefin stream (1) to a reactor (10); (b) contacting the olefin stream (1) with a polyolefine forming catalyst (6) in the reactor (10) to thereby obtain polyolefines (2) and a first effluent stream (3); (c) removing the polyolefines (2) and the first effluent stream (3) from the reactor (10) at separate outlets (12, 13); (d) directly subjecting the first effluent stream (3) to a membrane separation unit (20) to thereby obtain an olefin-enriched recycle stream (4) and a second effluent stream depleted in olefin (5); (e) feeding the reactor (10) with the recycle stream (4). According to this invention, the membrane separation unit (20) is as defined in claim 3.

As explained in further detail below, the inventive process allows using an intermediate grade monomer stream as feed for a polymerisation reactor (10). The non-reacted by-products (3) are fed to a membrane unit (20) where saturated, non-reactive compounds (5) are removed while non-converted olefins (4) are recycled. Thus, the process allows using intermediate grade monomer as a starting material and ensures a constant monomer concentration in the reactor (10). The inventive process thus allows economical production of polymers from both, polymer-grade monomers and non-polymer-grade monomers.

Without being bound to theory, it is believed that the membranes (22) described herein play an important role in successfully performing the continuous process described herein. Particularly, the combination of polymer matrix (24), channels (26) and molecular sieves (23) are important. The molecular sieves (23) remain within said channels (26) when used, ie. during manufacturing of membrane modules and when in use. To distinguish from simple (and removable) coatings of molecular sieves on membrane surfaces, the expression "tightly embedded" is used.

This aspect of the invention shall be explained in further details below.

**Membrane unit (20):** Membrane units are known per se; a membrane unit (20) comprises one or more membrane modules (21). Each membrane module, in turn, comprises one or more membranes (22). Until now, membranes (22) as defined herein were not applied in membrane units (20) for the purpose of olefin/paraffin separation, located downstream a polymerisation reactor (10). Membrane units (20) are adapted to elevated temperatures, e.g. 30 - 100°C and elevated pressures, e.g. 10 - 50 bar.

Typically, membranes (22) are housed in a membrane module (21) as known in the field, including Spiral-wound modules, plateframe modules and potted hollow-fiber modules. Flat-sheet membranes in spiral-wound modules are preferred. The making of all these types of modules is well known in the art.

The membranes (22) may be present in the form of flat sheets or in the form of fibers. Since conventional polymeric materials are used for the membranes, they are relatively easy and inexpensive to prepare and to house in modules, particularly compared with other types of membranes, such as pyrolysed carbon membranes and ceramic membranes. The making of all these types of modules is well known in the art.

According to this invention, membrane (22) comprises a first functional layer (25), optionally a backing layer (28) connected to the first functional layer. The membrane (22) may further comprise a $2^{nd}$ functional layer (27) opposite to said backing layer (28).

The first functional layer (25) comprises a polymer matrix (24) and molecular sieves (23) and said matrix (24) comprising channels perpendicular to the membrane surface thereby connecting both surfaces of said membrane and wherein said molecular sieves (23) are located within said channels. Due to the location of molecular sieves (23) within said channels, the molecular sieves are tightly embedded and the membranes show a selectivity for a given olefin/paraffin pair above the Knudsen limit.

A membrane unit may or may not comprise one or more washing modules (50). Such washing module being arrange prior to the membrane module(s) (21). Suitably, the washing module (51) is in fluid communication with the reactor (10) and with all of said one or more membrane modules (21). The washing module is adapted to receive effluent stream (3). It is configured to contact effluent stream (3) with a liquid (51), also known as scrubber solution, to thereby obtain a purified effluent stream (3').

A broad range of washing modules for gases is known and may be implemented in the inventive process.

In an embodiment, liquid (51) contains mineral oil and glycol and the module (50) is preferably of the liquid-liquid separation type. Such liquids and modules are known and described e.g. in Wo2019/118073.

Preferred are biphasic systems comprising mineral oil (e.g. available as hydrobrite) and propylene glycol in a ratio 1:5 to 5:1.

In an alternative embodiment, liquid (51) contains a mixture of liquid hydrocarbon and $C_{8-22}$ carboxylic acids. Again, such liquid is adapted to react with catalyst (6) and is also known as "hydrocarbon scrubbing liquid". In this embodiment, the module (50) is preferably of the stirred reactor vessel type. Such liquids and modules are known and described e.g. in US4826665.

Preferred are monophasic systems comprising mineral oil (e.g. diesel fuel oil) and one or more $C_{8-22}$ carboxylic acids in a ratio 20:1 to 2:1.

It was surprisingly found that implementing a washing module (50) within the membrane unit (20) improves the overall process for making polypropylene (2).

A polymer matrix (24) is polyethersulfone (PES).

**The molecular sieve (23)** within said optional second functional layer is selected from the group consisting of ZIF-8, modified ZIF-8 having an effective molecular sieve pore size of 0.41 nm, ZIF-90, and ZIF-7. 1

**The molecular sieve (23)** within said functional layer (25) is modified ZIF-8 having an effective pore size of 0.41 nm.

The molecular sieve (23) is a modified ZIF-8 (hereinafter ZIF-8'). Such ZIF-8' comprising zinc coordinated to 2-methylimidazole and having an effective pore size of 4.1 Angstroem. Such effective pore size is obtained by the synthetic protocol provided below and combining two different sources of zinc, namely non-soluble ZnO and soluble Zn-salt (preferably zinc nitrate Zn(N03)2). Thus, chemical composition of ZIF-8 and ZIF-8' are the same, but crystalline structure differs, resulting in different pore sizes, namely 2.9 - 3.3 Angstroem for ZIF-8 and 4.1 Angstroem for ZIF-8'. Without being bound to theory, it is believed that ZnO is important for initiating crystal formation in the pores of the membrane while soluble $Zn^{2+}$ - salt is important for formation of the appropriate crystal structure of ZIF-8'with its preferred pore size.

Determination of effective pore size for gas separation membranes is known in the field. Briefly, gas molecules of different size (corresponding to its kinetic diameter) are pressed through a membrane and the permeance (pressure / area corrected flow) being compared. The effective pore size is then determined by comparing the permeance. Example: $C_3H_6$ (kinetic diameter: 4.0 Angstroem) permeance of 20 GPU, $CO_2$ (kinetic diameter: 4.2 Angstroem) permeance of 1 GPU: effective pore size between these molecules, e.g. 4.1 Angstroem. Details may be found e.g. in Chaidou et al (Separation Science and Technology 47, 950-962, 2012).

**The backing layer (28)** is an organic polymer, selected from the group consisting of polypropylenes (PP), polyethylenes (PE), polyamides (PA), polyesterterephtalates (PET) and polyethersulfones (PES), such as a polyamide membrane. The backing layer has a meshlike structure and a thickness of 30 - 200 $\mu$m. Mesh-like structures may be obtained by woven- or non-woven fabrics, such as a gauze or a fleece.

The second functional layer (27) may comprise or consist of MOFs as defined herein.

Advantageously, the membrane (22) comprises or consists of a first functional layer (25) and a backing layer (28).

**Reactor (10):** Reactors conventional in the field may be used for the present method. Advantageously, fluidized bed reactors are used. Suitable reactors are adapted to convert the olefin into the corresponding polyolefine in the presence of catalyst. The reactor (10) is adapted to receive feed stream (1) and recycle stream (4) via one or more inlets (11). The reactor is further adapted to release formed polyolefin (2) via one or more outlets (12) and first effluent stream (3) via one or more outlets (13).

**Step (a):** Feeding a polymerisation reactor with the starting material is known. Depending on the reactor, the starting material may already contain catalyst. Alternatively, catalyst may be separately fed to the reactor and feed stream (1) is free of catalyst.

Further, recycle stream (4) and Feed stream (1) may be combined prior to feeding the reactor in one inlet; or these streams may be fed via separate inlets into the reactor.

Olefines are classified by its purity including, refinery grade, chemical grade and polymer grade. For propylene, the respective value for refinery grade (RGP) is -60-70%, for chemical grade (CGP) is ~92-96% and for polymer grade (PGP) is >99.5%. Replacing Polymer grade olefins by Chemical grade olefins is apparently beneficial for economic reasons. However, it also has a significant ecological impact, as energy - intense purification is avoided. In one embodiment, the olefin stream (1) is an intermediate grade olefin stream (e.g. RGP or CGP stream). Depending on the specific process applied, such olefin stream may be pre-treated to thereby remove components that can be critical to the catalyst. Such pre-treatment particularly reduces the concentration of sulfur, alkyne or oxygen containing compounds to acceptable levels.

The olefin stream (1) is a propylene stream and the polyolefine (2) is a polypropylene.

**Step (b):** Catalytic polymerisation of olefins to obtain polyolefines is a known process. Typically, the catalyst is present in the form of solid particles. The reaction may take place in a slurry or gas phase; at present gas phase polymerisation is preferred. Suitable reaction conditions for polypropylene are 50 - 80°C / 20-40 bar; for polyethylene 50-100 °C / 5-80 bar and for polyisobutene 40-80°C, 2-20 bar.

A number of reactor types and reaction conditions are known to the skilled person. It is an advantage of the present invention that reactors and plants currently in use may be adapted to implement the continuous process described herein. An upgrade of existing reactors / plants thereby improves both, the economics and the ecological balance sheet of existing reactors / plants. As discussed in the prior art cited above, the whole reaction mixture is removed from the reactor and subjected to an individual separation step. According to this invention, such individual separation can be avoided. Rather, the polyolefine (2) formed in this step (b) is removed via outlet (12), while a first effluent stream (3) is removed via outlet (13) from the reactor (10).

**Step (c):** In line with the inventive method, the polyolefine is separately removed via outlet (12) while the first effluent stream (3) is removed via outlet (13). Reactors adapted to such process step are known in the art. The layout avoids an additional separation unit, as required in the prior art discussed above.

In an embodiment, outlet (13) contains a means for removing / passivating catalyst (6). Such catalyst may be present in effluent stream (3) and may result in a negative influence on the performance of membrane unit (21).

**Step (d):** Separation step (d) is of key relevance for the inventive method. Due to the beneficial properties of the membranes described herein, it is possible to perform the synthesis using chemical grade olefins and / or to essentially avoid, or avoid, purge streams. In view of the membranes used, recycle stream (4) is the permeate while second effluent stream (5) is the residue.

It is considered advantageous that step (d) uses process parameters similar to reaction conditions (c), i.e. Temperatures +/- 20°C compared to the reactor and pressure +/- 10 bar compared to the reactor (10).

In one embodiment, the second effluent stream (5) comprises at most 25 %, preferably at most 5% olefin.

In one embodiment, the recycle stream (4) comprises at least 90%, preferably at least 95% olefin.

Separation step (c) follows directly past removal of effluent stream (3) from the reactor. Thus, between reactor (10) and membrane unit (20), no separation unit is required. This distinguishes from the above cited prior art where always a separation unit is required past the reactor. Apparently, avoiding such additional separation unit is a benefit to the process.

The first effluent stream of step (c) may be subjected to the step (d) in total, i.e. without a split. Alternatively, effluent stream (3) may be split into a stream subject to step (d) (stream 3') and a stream directly recycled to the reactor (stream 4'). Allowing such split improves process control and flexibility. Typically, more than 50%, preferably more than 90%, much preferably more than 95% of the first effluent stream are subjected to step (d). Thus, only a small fraction, if any, is directly recycled. Compared to the prior art, the highly effective membranes allow subjecting a large fraction to the separation unit (20).

In an exemplary embodiment, the first effluent (3) contains 80 - 90% olefin and the recycle stream (4) contains 95 - 99% olefine.

In an exemplary embodiment, the olefin stream (1) is polymer grade propylene, the membrane (24) is a PES membrane and the molecular sieve (23) is ZIF-8'.

In a further exemplary embodiment, the olefin stream (1) is chemical grade propylene, the membrane (24) is a PES membrane, and the molecular sieve (23) is ZIF-8'.

In a further exemplary embodiment, the olefin stream (1) is polymer grade propylene, the membrane (24) is a PES membrane, and the molecular sieve (23) is ZIF-8' in combination with further ZIFs, either as a mixture in one functional layer or separated in two functional layers.

In a further exemplary embodiment, the olefin stream (1) is chemical grade propylene, the membrane (24) is a PES membrane and the molecular sieve (23) is ZIF-8' in combination with further ZIFs, either as a mixture in one functional layer or separated in two functional layers.

In a further exemplary embodiment, the olefin stream (1) is polymer grade ethylene, the membrane (24) is a PES membrane and the molecular sieve (23) is ZIF-8'.

In a further exemplary embodiment, the olefin stream (1) is chemical grade ethylene, the membrane (24) is a PES membrane and the molecular sieve (23) is ZIF-8'.

**Further Steps:** It is apparent that the inventive polymer manufacturing process may be embedded in a larger process and / or may be complemented by further process steps. Such steps are known in the field and include the steps described below

**Step (f)** In one embodiment, the second effluent stream (5) may be fed to a heating unit. As stream (5) is depleted in olefins and rich in alkanes, it may be used to generate heat, e.g. for heating reactor (10). In one further embodiment, the second effluent stream (5) may be fed to a gas turbine to thereby generating electrical energy (7). This energy may be used for a compressor to pressurize stream (4) before feeding it to reactor (10) .

In a **second aspect,** the invention relates to the use of specific membranes (22), membrane modules (21) and membrane units (20), all as described herein, in a catalytic propene polymerisation process.

In a **third aspect,** the invention relates to novel membranes, membrane modules, membrane units and polymerisation plants comprising them as well as the manufacturing of membranes and membrane modules.

In one embodiment, the invention provides for a membrane (22) as defined in claim 3.

In one embodiment, the invention provides for a membrane as described above, further comprising (iv) a second functional layer containing (27), ie. comprising or consisting of, molecular sieves (23) as described herein (preferably ZIF-8, ZIF-90, ZIF-7 and combinations thereof). By including such second functional layer (27), performance of the membrane may be fine-tuned. In an embodiment, the molecular sieves (23) of first and second functional layer differ.

Said backing layer (28) has a thickness of 30 - 200 micron. Further, the material of said backing layer (28) is selected from the group consisting of polypropylenes, polyethylenes, poylamides, polyethylene-terephtalates, or polyethersulfones. The molecular sieves (23) within said optional second functional layer are selected from the group consisting of ZIF-8, modified ZIF-8 having an effective pore size of 0.41 nm, ZIF-90, and ZIF-7. The material of the polymer matrix (24) is selected from the group of Polyethersulfones (PES). It was found that the combination of modified ZIF-8 (23) and backing layer in the form of a mesh (28) provides particularly good selectivities under conditions applied in commercial scale production of polyolefines.

In one embodiment, the invention provides for a membrane module (21), comprising one or more membranes as described herein. Advantageously, the membrane modules are adapted to gas separation processes as described herein. Such modules are known per se, but not containing the membranes as described herein. It is considered an advantage that present membrane modules may be replaced by the inventive membrane modules, thereby improving polyolefine production. Inventive membrane modules may be selected from the group of "flat sheet" membrane modules and "hollow fibre" membrane modules. Such membrane modules may comprise one or more membranes (22) as described herein.

In one embodiment the membrane module is a flat sheet membrane module, selected from spiral wound membrane modules, plate frame modules, and tubular modules, particularly tubular modules.

In one further embodiment, the membrane module is selected from hollow fibre membrane modules.

In one embodiment, the invention provides for a membrane separation unit (20) adapted to the process of claim 1, said separation unit comprises a membrane as defined in claim 3.

Described herein is a polypropylene-production plant comprising a reactor (10) and a membrane unit (20), the reactor (10) being a fluidized bed reactor adapted to convert chemical grade propylene feed, the membrane unit (20) comprising one or more membranes (22) as defined in claim 3, the membrane unit (20) being in direct fluid communication with the reactor to receive a stream free of polypropylene.

Described herein is a polypropylene-production plant comprising a reactor (10) and a membrane unit (20), the reactor (10) being a fluidized bed reactor adapted to convert chemical grade propylene feed, the membrane unit (20) comprising one or more membranes (22) as defined in claim 3, the membrane unit (20) being in direct fluid communication with the reactor to receive a stream free of polypropylene and the membrane unit (20) comprising a washing module (50) being in fluid communication with said reactor (10) to receive a stream (3) and in fluid communication with said membrane unit (20) to provide a purified stream (3'). It was found that such washing module (5) ("scrubber") improves performance of the plant, particularly long term selectivity of the membrane unit is ensured.

Described herein is a polyethylene-production plant comprising a reactor (10) and a membrane unit (20), the reactor (10) being a fluidized bed reactor adapted to convert as chemical grade ethylene feed, the membrane unit (20) comprising one or more membranes (22) as defined in claim 3, the membrane unit (20) being in direct fluid communication with the reactor to receive a stream free of polyethylene. In embodiments, this PE-production plant also contains a washing module (50) as discussed above.

In one embodiment, the invention provides for manufacturing a membrane (22) as defined in claim 1.

In embodiments, the invention provides for membranes (22) obtained by or obtainable by the methods of claim 1.

To further illustrate the invention, the following **examples** are provided. These examples are provided with no intend to limit the scope of the invention.

**Example I Manufacturing and Characterization of membrane**

    I.a A membrane with ZIF-8 (not according to invention) is prepared in 5 steps (a-e), as described below:

        Step (a), provision of dispersion: 10 wt% Polyethersulfone was dissolved in dimethylacetamide and mixed with ZnO-nanoparticles (Zincox 19, Ibutec) and glycerol (Sigma-Aldrich, >99.5%). The particles were dispersed using a ultrasonication processor.
        Step (b), coating: A spiral film applicator (Zehnter, ZAA2300, 180 um wire bar, 0.1 m/min) was used to produce the ZnO containing films in (150 cm$^2$) size.
        Step (c), phase inversion: In this step, pores are formed in the polymer matrix by a phase-inversion process. This is done by drying the coated film at temperatures of 110°C in an oven for 10 minutes.
        Step (d), ZIF Functionalization: The ZnO containing sheet (150 cm$^2$) is incubated in 400 ml of solution 1 (1 wt% imidazole-linker) for 1 h at 50°C and then washed for 1 h in 400 ml of methanol and dried subsequently.
        Step (e), support with backing layer: a sheet (150 cm$^2$) of porous support layer (Parafil RT 30 g/m$^2$) is prepared by applying spray glue to it (Uhu Spray Adhesive) and the functionalized membrane is then pressed onto the backing layer for 5 h with a force of 0.1 N/cm$^2$ and dried subsequently.

    I.b A membrane with modified ZIF-8'is prepared in 5 steps (a-e), as described below:
    Steps (a), (b) , (c) and (e) were performed as described in example 1.a, while Step (d) was modified as follows:

        Step (d), ZIF Functionalization: The ZnO containing sheet (150 cm$^2$) is incubated in 400 ml of solution 2 (1 wt% imidazole-linker and 0.8 g of zinc nitrate hexahydrate (Sigma Aldrich >99.0%))
        for 1 h at 50°C and then washed for 1 h in 400 ml of methanol and dried subsequently.

Characterization: the main important membrane characterization parameters ideal selectivity (preferred transportation of one gas over another through the membrane) and permeance (pressure and area corrected molar flow through the membrane in GPU, 1 GPU = $10^{-6}$ cm$^3$ (STP) cm$^{-2}$ s$^{-1}$ cmHg$^{-1}$), where measured in samples of 2 cm$^2$ in a pressure cell. Propylene and propane at 1 bar(g) was applied.

| | Permeance (GPU) | | Ideal Selectivity |
|---|---|---|---|
| Sample: ZIF-8' | C3H6 | C3H8 | C3H6/C3H8 |
| 1 | 18.5 | 1.0 | 18.5 |

(continued)

|  | Permeance (GPU) | | Ideal Selectivity |
|---|---|---|---|
| Sample: ZIF-8' | C3H6 | C3H8 | C3H6/C3H8 |
| 2 | 24.0 | 1.0 | 23.9 |
| 3 | 24.1 | 1.7 | 14.0 |
| Average | 22.2 ± 2.6 | 1.2 ± 0.3 | 18.7 ± 4.1 |

**Example II Implementation in Polymerisation process**

A computational simulation was performed to illustrate the recovery of monomer losses that occur in a state-of-the-art polypropylene process. In example II.a, polymer-grade propylene is used while in example II.b, chemical-grade propylene is used.

**Example II.a**

The **base case** describes the process of Figure 1.a, without the membrane separation unit (20). A total feed (1) of 10.7 t/h is assumed, an average feed amount for this process, taken from Baker (US6271319). The olefin losses occur because the corresponding unreactive paraffin has to be removed from the system constantly in order to avoid propane build-up. With the paraffin vapour, a portion of the olefin, typically 70-90 % of the total effluent stream, is lost or has to be recycled by other means. The high olefin amount is derived from the olefin concentration in the polymerization reactor (10), where a certain olefin concentration has to be reached to ensure optimal reaction rate. The effluent stream (3) value is composed of the paraffin in the total feed (1), which corresponds to 30% of the stream, while the remaining 70% are the olefin, mirroring a reactor concentration of 70% monomer. The goal of the system is to remove the paraffin, e.g. propane, that is entering the system with the feed.

The **inventive case** describes the process of Figure 1.a with the membrane separation unit (20) while the base case considers direct recycling without the means of such separation unit (not shown in the figures). The membrane parameters used for the simulations where a propylene over propane selectivity of 18.7 and a propylene permeance of 22.2 GPU, as described example 1.

| Example with PGP feed (propylene content **99.5 wt%**) | | |
|---|---|---|
|  | Base case without membrane (comparative) | Case with membrane unit (inventive) |
| Effluent stream 3 (kg/h) | 178 | 250 |
| Propane content (wt %) | 30 | 30 |
| Propane amount (kg/h) | 54 | 75 |
| Propylene content (wt %) | 70 | 70 |
| Propylene amount (kg/h) | 125 | 175 |
| Second effluent stream 5 (kg/h) | 178 | 59 |
| Propane content (wt %) | 30 | 92 |
| Propane amount (kg/h) | **54** | **54** |
| Propylene content (wt %) | 70 | 8 |
| Propylene amount (kg/h) | **125** | **5** |

In Example II.a it is apparent that with the membrane unit the same amount of propane is removed from the system compared to the base case (54 kg/h each). At the same time, the loss of propylene is more than 30 times less (125 kg/h vs 5 kg/h).

**Example II.b**

The same applies for example II.b. Here, the feed is chemical grade propylene with a propylene purity of 93 wt%. Again, a base case without membrane separation unit (20) is compared with an inventive case comprising membrane separation unit (20), applying the parameters described above in example II.a.

| Example with CGP feed (propylene content **93.0 wt%**) | | |
|---|---|---|
| | Base case without membrane (comparative) | Case with membrane unit (inventive) |
| Effluent stream 3 (kg/h) | 2499 | 3850 |
| Propane content (wt %) | 30 | 30 |
| Propane amount (kg/h) | 750 | 1155 |
| Propylene content (wt %) | 70 | 70 |
| Propylene amount (kg/h) | 1749 | 2695 |
| Second effluent stream 5 (kg/h) | 2499 | 765 |
| Propane content (wt %) | 30 | 98 |
| Propane amount (kg/h) | **750** | **750** |
| Propylene content (wt %) | 70 | 2 |
| Propylene amount (kg/h) | **1749** | **15** |

In Example II.b it is apparent that also by using CGP feed with the membrane unit the same amount of propane is removed from the system compared to the base case (750 kg/h each). At the same time, the loss of propylene is more than 100 times less (1749 kg/h vs 15 kg/h). As can be seen, CGP feed is likewise suitable for the polymerisation reaction.

**Example III Implementation in Polymerisation Process** - **model system**

An experimental set up was established to investigate membrane performance under typical conditions of a state-of-the-art polypropylene process.
To that end, membranes are assembled to a spiral wound module (12 inch in length, membrane area of 0.5 m2). This module was connected to a gas stream comprising propane / propene ( C3H8 50%/ C3H6 50% @ 5 bar feed pressure) . In example III.a, comparative,a propylene membrane (22) with one functional layer (25) according to example I.b (ZIF-8') is used while in example III.b, the same membrane (ZIF-8') is used, but additional featuring a backing layer (polyamide support layer with a thickness of 80 micrometers). The results observed are given in the table below.

Membrane performance in model test system

| Membrane type | Without backing layer, ex. III.a | With backing layer, ex. III.b |
|---|---|---|
| C3H6 over C3H8 selectivity | 1.0 | 25.0 |

As can be seen from the data provided, membranes comprising a backing layer (28) in addition to a functional layer (25) show substantially improved selectivity under commercially relevant conditions.

**Claims**

**1.**   A method for manufacturing a membrane (22),

the membrane (22) comprising

• a backing layer (28) in the form of a mesh and having a thickness of 30 - 200 micrometers,
• a functional layer (25) comprising a polymer matrix (24) and molecular sieves (23), said functional layer (25) comprising channels (26) within said matrix (24) perpendicular to the membrane surface thereby connecting both surfaces of said membrane and wherein said molecular sieves (23) are located within said channels (26),
• optionally a second functional layer containing molecular sieves (23);

wherein

- the material of said backing layer (28) is selected from the group consisting of polypropylenes, polyethylenes, poylamides, polyethyleneterephtalates, or polyethersulfones, and
- the material of the polymer matrix (24) is selected from the group of Polyethersulfones (PES); and
- the molecular sieve (23) within said functional layer (25) is modified ZIF-8 having an effective pore size of 0.41 nm; and
- the molecular sieves (23) within said optional second functional layer are selected from the group consisting of ZIF-8, modified ZIF-8 having an effective molecular sieve pore size of 0.41 nm, ZIF-90, and ZIF-7

the method comprising the steps of:

(i) providing a dispersion (5) consisting of a dispersed phase (51) and continuous phase (52)

- said dispersed phase (51) comprising nanoparticles selected from the group consisting of ZnO;
- said continuous phase (52) comprising a polymer, a first solvent and a second solvent;

(ii) coating a substrate (6) with said dispersion (5);
(iii) subjecting the obtained material to a phase inversion step by removing said first solvent to thereby obtain a precursor material (13);
(iv) contacting the obtained precursor material (13) with a solution (7) comprising

- a solvent selected from the group consisting of water, C1-C8 mono-alcohols optionally in combination with water, dimethylacetamide in combination with water or methanol;
- 2-methyl imidazole; and
- a Zn-salt soluble in said solvent, preferably $Zn(NO_3)_2$,

(v) optionally removing the obtained composite material (11) from said substrate (6) and / or
(vi) optionally further processing the obtained composite material (11)

to thereby obtain said membrane (22).

2. The method of claim 1, wherein

- in said step (ii) the substrate is the backing layer (28) and step (v) does not take place; and / or
- wherein step (vi) involves formation of the second functional layer containing molecular sieves (23).

3. A membrane obtained by the method of claims 1 or 2.

4. A continuous process for making polypropylene (2), comprising the steps of

(a) feeding an propylene stream (1) to a reactor (10);
(b) contacting the propylene stream (1) with a propylene forming catalyst (6) in the reactor (10) to thereby obtain polypropylene (2) and a first effluent stream (3) ;
(c) removing the polypropylene (2) and the first effluent stream (3) from the reactor (10) at separate outlets (12, 13);
(d) directly subjecting the first effluent stream (3) to a membrane separation unit (20) to thereby obtain an propylene-enriched recycle stream (4) and a second effluent stream depleted in propylene (5);
(e) feeding the reactor (10) with the recycle stream (4); and
(f) optionally feeding a gas turbine or heating unit (30) with the second effluent stream (5);

**characterized in that** the membrane separation unit (20) comprises one or more membrane modules (21), and optionally one or more washing modules (50) arranged prior to the membrane module (21), wherein each membrane module comprising one or more membranes (22), according to claim 3.

5. The process of claim 4, where the propylene stream (1) is an intermediate grade propylene stream selected from

- refinery grade (RGP) having ~60-70 wt% purity, or

▪ chemical grade (CGP) having ~92-96 wt% purity.

6. The process of claim 4 or 5, where the washing module (50) is present and wherein

   • said washing module is in fluid communication with the reactor (10) and with all of said one or more membrane modules (21);
   • said washing module allows contacting of effluent stream (3) with a liquid (51) to thereby obtain a purified effluent stream (3'),

   said liquid (51) is adapted to react with catalyst (6), preferably selected from homogeneous systems, such as a combination of hydrocarbon and C8-22 carboxylic acid, or biphasic systems, such as combination of hydrocarbon and glycol.

7. The process according to any of claims 4 to 6, where in step (d)

   • the second effluent stream (5) comprises at most 25 wt.%, preferably at most 5 wt.% olefin; and / or
   • the recycle stream (4) comprises at least 90 wt.%, preferably at least 95 wt.% olefin.


**Patentansprüche**

1. Ein Verfahren zur Herstellung einer Membran (22),

   wobei die Membran (22) umfasst

   - eine Trägerschicht (28) in Form eines Netzes und mit einer Dicke von 30 - 200 Mikrometern,
   - eine Funktionsschicht (25), die eine Polymermatrix (24) und Molekularsiebe (23) umfasst, wobei die Funktionsschicht (25) Kanäle (26) innerhalb der Matrix (24) senkrecht zur Membranoberfläche umfasst, wodurch beide Oberflächen der Membran verbunden werden, und wobei die Molekularsiebe (23) innerhalb der Kanäle (26) angeordnet sind,
   - gegebenenfalls eine zweite Funktionsschicht, die Molekularsiebe (23) enthält;

   wobei

   - das Material der Trägerschicht (28) ausgewählt ist aus der Gruppe bestehend aus Polypropylenen, Polyethylenen, Poylamiden, Polyethylenterephthalaten oder Polyethersulfonen, und
   - das Material der Polymermatrix (24) ausgewählt ist aus der Gruppe der Polyethersulfone (PES); und
   - das Molekularsieb (23) innerhalb der Funktionsschicht (25) ist modifiziertes ZIF-8 mit einer effektiven Porengrösse von 0,41 nm; und
   - die Molekularsiebe (23) innerhalb der optionalen zweiten Funktionsschicht ausgewählt sind aus der Gruppe bestehend aus ZIF-8, modifiziertem ZIF-8 mit einer effektiven Molekularsiebporengrösse von 0,41 nm, ZIF-90 und ZIF-7

   wobei das Verfahren die folgenden Schritte umfasst:

   (i) Bereitstellen einer Dispersion (5), die aus einer dispergierten Phase (51) und einer kontinuierlichen Phase (52) besteht

      - wobei die dispergierte Phase (51) Nanopartikel umfasst, die aus der Gruppe ausgewählt sind, die aus ZnO besteht;
      - wobei die kontinuierliche Phase (52) ein Polymer, ein erstes Lösungsmittel und ein zweites Lösungsmittel umfasst;

   (ii) Beschichten eines Substrats (6) mit der Dispersion (5);
   (iii) Unterziehen des erhaltenen Materials einem Phaseninversionsschritt durch Entfernen des ersten Lösungsmittels, um dadurch ein Vorläufermaterial (13) zu erhalten;
   (iv) Inkontaktbringen des erhaltenen Vorläufermaterials (13) mit einer Lösung (7), umfassend

- ein Lösungsmittel, ausgewählt aus der Gruppe bestehend aus Wasser, C1-C8-Monoalkoholen, gegebenenfalls in Kombination mit Wasser, Dimethylacetamid in Kombination mit Wasser oder Methanol;
- 2-Methylimidazol; und
- ein in diesem Lösungsmittel lösliches Zn-Salz, vorzugsweise $Zn(NO_3)_2$,

(v) optionales Entfernen des erhaltenen Verbundmaterials (11) vom Substrat (6); und/oder
(vi) optionales Weiterverarbeiten des erhaltenen Verbundmaterials (11);

um dadurch die Membran (22) zu erhalten.

2. Das Verfahren nach Anspruch 1, wobei

- im Schritt (ii) das Substrat die Trägerschicht (28) ist und der Schritt (v) nicht stattfindet; und/oder
- wobei Schritt (vi) die Bildung der zweiten Funktionsschicht beinhaltet, die Molekularsiebe (23) enthält.

3. Eine Membran, erhalten nach dem Verfahren der Ansprüche 1 oder 2.

4. Ein kontinuierliches Verfahren zur Herstellung von Polypropylen (2), das die folgenden Schritte umfasst

(a) Einspeisen eines Propylenstroms (1) in einen Reaktor (10) ;
(b) Inkontaktbringen des Propylenstroms (1) mit einem Propylen bildenden Katalysator (6) im Reaktor (10), um dadurch Polypropylen (2) und einen ersten Abstrom (3) zu erhalten;
(c) Entfernen des Polypropylens (2) und des ersten Abflussstroms (3) aus dem Reaktor (10) an getrennten Auslässen (12, 13);
(d) direktes Unterwerfen des ersten Ausflussstroms (3) einer Membrantrenneinheit (20), um dadurch einen mit Propylen angereicherten Rückführstrom (4) und einen zweiten, an Propylen verarmten Ausflussstrom (5) zu erhalten;
(e) Beschicken des Reaktors (10) mit dem Rückführstrom (4); und
(f) optionales Beschicken einer Gasturbine oder Heizeinheit (30) mit dem zweiten Abstrom (5);

**dadurch gekennzeichnet, dass** die Membrantrenneinheit (20) ein oder mehrere Membranmodule (21) und optional ein oder mehrere Waschmodule (50) umfasst, die vor dem Membranmodul (21) angeordnet sind, wobei jedes Membranmodul eine oder mehrere Membranen (22) umfasst, gemäss Anspruch 3.

5. Das Verfahren nach Anspruch 4, wobei der Propylenstrom (1) ein Propylenstrom mittlerer Qualität ist, ausgewählt aus

- Raffineriequalität (RGP) mit ~60-70 Gew.-% Reinheit, oder
- chemische Qualität (CGP) mit einer Reinheit von 92-96 Gew.-%.

6. Das Verfahren nach Anspruch 4 oder 5, wobei das Waschmodul (50) vorhanden ist und wobei

- das Waschmodul in Fluidverbindung mit dem Reaktor (10) und mit allen der ein oder mehreren Membranmodule (21) steht;
- das Waschmodul den Kontakt des Abflussstroms (3) mit einer Flüssigkeit (51) ermöglicht, um dadurch einen gereinigten Abflussstrom (3") zu erhalten,

wobei die Flüssigkeit (51) geeignet ist, mit einem Katalysator (6) zu reagieren, der vorzugsweise aus homogenen Systemen, wie einer Kombination aus Kohlenwasserstoff und C8-22-Carbonsäure, oder biphasischen Systemen, wie einer Kombination aus Kohlenwasserstoff und Glykol, ausgewählt ist.

7. Das Verfahren nach einem der Ansprüche 4 bis 6, wobei in Schritt (d)

- der zweite Abflussstrom (5) höchstens 25 Gew.-%, vorzugsweise höchstens 5 Gew.-% Olefin enthält; und/oder
- der Rücklaufstrom (4) mindestens 90 Gew.-%, vorzugsweise mindestens 95 Gew.-%, Olefin enthält.

**Revendications**

1. Un procédé de fabrication d'une membrane (22),

   la membrane (22) comprenant

   - une couche de support (28) sous la forme d'un filet et d'une épaisseur de 30 à 200 micromètres,
   - une couche fonctionnelle (25) comprenant une matrice polymère (24) et des tamis moléculaires (23), dans laquelle la couche fonctionnelle (25) comprend des canaux (26) à l'intérieur de la matrice (24) perpendiculaires à la surface de la membrane, reliant ainsi les deux surfaces de la membrane, et dans laquelle les tamis moléculaires (23) sont disposés à l'intérieur des canaux (26),
   - une deuxième couche fonctionnelle facultative contenant des tamis moléculaires (23) ;

   où

   - le matériau de la couche de support (28) est choisi dans le groupe constitué par les polypropylènes, les polyéthylènes, les polyamides, les polyéthylène téréphtalates ou les polyéthersulfones, et
   - le matériau de la matrice polymère (24) est choisi dans le groupe des polyéthersulfones (PES) ; et
   - le tamis moléculaire (23) à l'intérieur de la couche fonctionnelle (25) est ZIF-8 modifié ayant une taille de pore effective de 0,41 nm ; et
   - les tamis moléculaires (23) à l'intérieur de la deuxième couche fonctionnelle facultative sont choisis dans le groupe constitué par le ZIF-8, le ZIF-8 modifié ayant une taille de pore de tamis moléculaire effective de 0,41 nm, le ZIF-90 et le ZIF-7

   ledit procédé comprenant les étapes suivantes :

   (i) fournir une dispersion (5) constituée d'une phase dispersée (51) et d'une phase continue (52)

      ◦ dans laquelle la phase dispersée (51) comprend des nanoparticules choisies dans le groupe constitué par ZnO ;
      ◦ dans laquelle la phase continue (52) comprend un polymère, un premier solvant et un deuxième solvant ;

   (ii) revêtir un substrat (6) avec la dispersion (5) ;
   (iii) soumettre le matériau obtenu à une étape d'inversion de phase en éliminant le premier solvant, pour obtenir ainsi un matériau précurseur (13) ;
   (iv) mettre en contact le matériau précurseur obtenu (13) avec une solution (7) comprenant

      ◦ un solvant choisi dans le groupe constitué par l'eau, les monoalcools en C1-C8, éventuellement en combinaison avec l'eau, le diméthyl-acétamide en combinaison avec l'eau ou le méthanol ;
      ◦ 2-méthylimidazole ; et
      ◦ un sel de Zn soluble dans ledit solvant, de préférence $Zn(NO_3)_2$,

   (v) éventuellement, enlever le matériau composite (11) obtenu du substrat (6) et/ou
   (vi) éventuellement, traiter ultérieurement du matériau composite obtenu (11)

   pour obtenir ainsi la membrane (22).

2. Le procédé selon la revendication 1, dans lequel

      ◦ dans l'étape (ii), le substrat est la couche de support (28) et l'étape (v) n'a pas lieu ; et/ou
      ◦ dans lequel l'étape (vi) comprend la formation de la deuxième couche fonctionnelle contenant des tamis moléculaires (23).

3. Une membrane obtenue par le procédé des revendications 1 ou 2.

4. Un procédé continu de production de polypropylène (2), comprenant les étapes suivantes

(a) introduire un courant de propylène (1) dans un réacteur (10) ;

(b) mettre en contact le courant de propylène (1) avec un catalyseur de formation de propylène (6) dans le réacteur (10), pour obtenir ainsi du polypropylène (2) et un premier effluent (3) ;

(c) retirer le polypropylène (2) et le premier courant effluent (3) du réacteur (10) par des sorties séparées (12, 13) ;

(d) soumettre directement le premier courant d'effluent (3) à une unité de séparation à membrane (20) pour obtenir ainsi un courant de recyclage (4) enrichi en propylène et un deuxième courant d'effluent (5) appauvri en propylène ;

(e) charger le réacteur (10) avec le courant de recyclage (4) ; et

(f) éventuellement, alimenter une turbine à gaz ou une unité de chauffage (30) avec le deuxième effluent (5); **caractérisé en ce que** l'unité de séparation à membrane (20) comprend un ou plusieurs modules membranaires (21) et, de manière optionnelle, un ou plusieurs modules de lavage (50) disposés en amont du module membranaire (21), chaque module membranaire comprenant une ou plusieurs membranes (22), selon la revendication 3.

**5.** Le procédé selon la revendication 4, dans lequel le flux de propylène (1) est un flux de propylène de qualité moyenne, choisi parmi

∘ qualité raffinerie (RGP) avec ~60-70% en poids de pureté, ou

∘ qualité chimique (CGP) avec une pureté de 92-96% en poids.

**6.** Le procédé selon la revendication 4 ou 5, dans lequel le module de lavage (50) est présent et dans lequel

- le module de lavage est en communication fluidique avec le réacteur (10) et avec l'ensemble des un ou plusieurs modules membranaires (21) ;

- le module de lavage permet au flux d'effluent (3) d'entrer en contact avec un liquide (51) pour obtenir ainsi un flux d'effluent purifié (3'),

ledit liquide (51) étant apte à réagir avec un catalyseur (6), de préférence choisi parmi les systèmes homogènes, tels qu'une combinaison d'hydrocarbure et d'acide carboxylique en C8-22, ou les systèmes biphasiques, tels qu'une combinaison d'hydrocarbure et de glycol.

**7.** Le procédé selon l'une des revendications 4 à 6, dans lequel, à l'étape (d)

- le deuxième courant d'effluent (5) contient au plus 25% en poids, de préférence au plus 5% en poids d'oléfine ; et/ou

- le flux de retour (4) contient au moins 90% en poids, de préférence au moins 95% en poids, d'oléfine.

Fig. 1a

Fig 1b

Fig. 1.c

Fig. 2.a

Fig. 2.b

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005082957 A, Van Egmond
- US 6271319 B, Baker
- US 2020306698 A1
- WO 2019186134 A1
- US 2016263533 A1
- US 9120882 B2
- US 2015251139 A1
- US 4826665 A

**Non-patent literature cited in the description**

- **CHAIDOU et al.** *Separation Science and Technology*, 2012, vol. 47, 950-962